# EUROPEAN PATENT APPLICATION

(11) **EP 2 711 397 A1**
(43) Date of publication of application: **26.03.2014**
(21) Application number: 12782067.8
(22) Date of filing: 11.05.2012
(51) Int. Cl.: C08L 101/00, B05D 7/24, B32B 9/00, C08F 2/48, C08J 7/04, C09D 7/12, C09D 133/00, C09D 183/04, C09D 201/00

(54) **ACTIVE ENERGY RAY-CURABLE COMPOSITION, LAMINATE, AND METHOD FOR PRODUCING LAMINATE**

(30) Priority: 11.05.2011 JP 2011106139
(71) Applicant: Mitsubishi Rayon Co., Ltd., Tokyo 100-8253 (JP)
(72) Inventor: NOMURA Mina, Yokohama-shi, Kanagawa 230-0053 (JP); TAKEUCHI Hiroshi, Yokohama-shi, Kanagawa 230-0053 (JP)
(74) Representative: Ter Meer Steinmeister & Partner
(86) International application number: PCT/JP2012/062181
(87) International publication number: WO 2012/153848

(57) **Abstract**

[Task] To provide an active energy ray-curable composition capable of forming within a short time a cured coating film having a favorable outer appearance and excellent abrasion resistance, cracking resistance, and weather resistant adhesiveness, a laminate having the cured coating film laminated on a substrate surface, and a method for producing the same.

An active energy ray-curable composition containing the following component (A) to component (D):
(A) a siloxane-based oligomer that is a hydrolytic condensate of a silane-based monomer containing an organoalkoxysilane represented by Formula (1), in which the siloxane-based oligomer has a weight average molecular weight of 2,000 or less

R¹ₐSi(OR²)₄₋ₐ (1)

(in which R¹ represents an organic group with 1 to 10 carbon atoms, R² represents an alkyl group with 1 to 5 carbon atoms or an acyl group with 1 to 4 carbon atoms, and a represents an integer of 1 to 3),

(B) an epoxy group-containing alkoxysilane represented by Formula (2)

R³R⁴_{b}Si(OR⁵)_{3-b} (2)

(in which R³ represents an organic group containing an epoxy group, R⁴ represents an organic group with 1 to 10 carbon atoms, R⁵ represents an alkyl group with 1 to 5 carbon atoms or an acyl group with 1 to 4 carbon atoms, and b represents an integer of 0 to 2),

(C) an organic polymer having a weight average molecular weight of 30,000 or more, and
(D) an active energy ray-sensitive acid generating agent.

## Description

### [TECHNICAL FIELD]

The present invention relates to an active energy ray-curable composition, a laminate obtained by curing the curable composition, and a method for producing the laminate.

### [BACKGROUND ART]

In recent years, a transparent plastic material such as an acryl resin and a polycarbonate resin with excellent fracture resistance and an excellent lightweight property is widely used as a substitute for a transparent glass. Also for outdoor applications such as a grazing material for an automobile, a road sign, a fence material such as a road soundproof fence, and a terrace roofing material, it is highly desired in recent years to use the transparent plastic material.

Under the circumstances, Patent Documents 1 and 2 disclose a siloxane compound obtained by hydrolyzing and condensing a specific silicate capable of forming within a short time a protective film which has excellent appearance and excellent adhesiveness to a substrate, and high abrasion resistance that can be used for outdoor applications, and an active energy ray-curable coating composition containing an active energy ray sensitive cationic polymerization initiator, an epoxy compound, and an acryl polymer.

### [CITATION LIST]

### [PATENT DOCUMENT]

[Patent Document 1]WO 2005/085373 A
[Patent Document 2]JP 2010-270202 A

### [DISCLOSURE OF THE INVENTION]

### [PROBLEM TO BE SOLVED BY THE INVENTION]

However, the techniques described above have a problem in that, in order to have good adhesiveness between a cured coating film and a substrate by suppressing an occurrence of cracks in the cured coating film, a decrease in abrasion resistance of the cured coating film is easily yielded. In addition, although the cured coating film has good initial adhesiveness to a substrate, it cannot be said that it has sufficient weather resistant adhesiveness after exposure to an outdoor environment.

### [MEANS FOR SOLVING PROBLEM]

The first gist of the invention is an active energy ray-curable composition containing the following component (A) to component (D).
(A) a siloxane-based oligomer that is a hydrolytic condensate of a silane-based monomer (herein after, referred to as "silane-based monomer (1')") containing an organoalkoxysilane represented by Formula (1) (herein after, referred to as "organoalkoxysilane (1)"), in which the siloxane-based oligomer has a weight average molecular weight (Mw) of 2,000 or less (herein after, referred to as "component (A)")

   R¹ₐSi(OR²)₄₋ₐ (1)

   (in which R¹ represents an organic group with 1 to 10 carbon atoms, R² represents an alkyl group with 1 to 5 carbon atoms or an acyl group with 1 to 4 carbon atoms, and a represents an integer of 1 to 3),
(B) an epoxy group-containing alkoxysilane represented by Formula (2) (herein after, referred to as "component (B)")

   R³R⁴_{b}Si(OR⁵)_{3-b} (2)

   (in which R³ represents an organic group containing an epoxy group, R⁴ represents an organic group with 1 to 10 carbon atoms, R⁵ represents an alkyl group with 1 to 5 carbon atoms or an acyl group with 1 to 4 carbon atoms, and b represents an integer of 0 to 2),
(C) an organic polymer having a weight average molecular weight of 30,000 or more (herein after, referred to as "component (C)"), and
(D) an active energy ray-sensitive acid generating agent (herein after, referred to as "component (D)").

The second gist of the invention is a cured coating film obtained by coating the active energy ray-curable composition on a substrate, in which the cured coating film has a surface layer containing a relatively large amount of a siloxane-based polymer compared to an innermost layer and the innermost layer containing, compared to the surface layer, a relatively large amount of (C) the organic polymer which forms a surface in contact with the substrate surface of the cured coating film.

The third gist of the invention is a method for producing a laminate including forming a coated film by applying the curable composition on a substrate surface, evaporating a solvent in the coating film at a temperature which is at or above the temperature at which the component (D) generates an acid by heat, and subsequently irradiating the coated film with active energy rays to form a cured coating film.

### [EFFECT OF THE INVENTION]

According to the invention, a cured coating film having a favorable appearance and excellent abrasion resistance, cracking resistance, and weather resistant adhesiveness can be formed within a short time, and therefore it can be used for various outdoor applications, which require high weather resistance (that is, cracking resistance and weather resistant adhesiveness) and abrasion resistance, such as a grazing material for an automobile, a road sign, a fence material like a road soundproof fence, and a terrace roofing material.

### [BRIEF DESCRIPTION OF DRAWINGS]

[Fig. 1] Fig. 1 is a photographic image of a cross-section illustrating an embodiment of a cured coating film of the invention (Example 5);
[Fig. 2] Fig. 2 is a photographic image of a cross-section illustrating an embodiment of the cured coating film of the invention (Example 7);
[Fig. 3] Fig. 3 is a photographic image of a cross-section illustrating an embodiment of the cured coating film of the invention (Example 8);
[Fig. 4] Fig. 4 is a photographic image of a cross-section illustrating an embodiment of a cured coating film not belonging to the invention (Comparative Example 1);
[Fig. 5] Fig. 5 is a photographic image of a cross-section illustrating an embodiment of the cured coating film not belonging to the invention (Comparative Example 2);
[Fig. 6] Fig. 6 is a photographic image of a cross-section illustrating an embodiment of the cured coating film not belonging to the invention (Comparative Example 6);

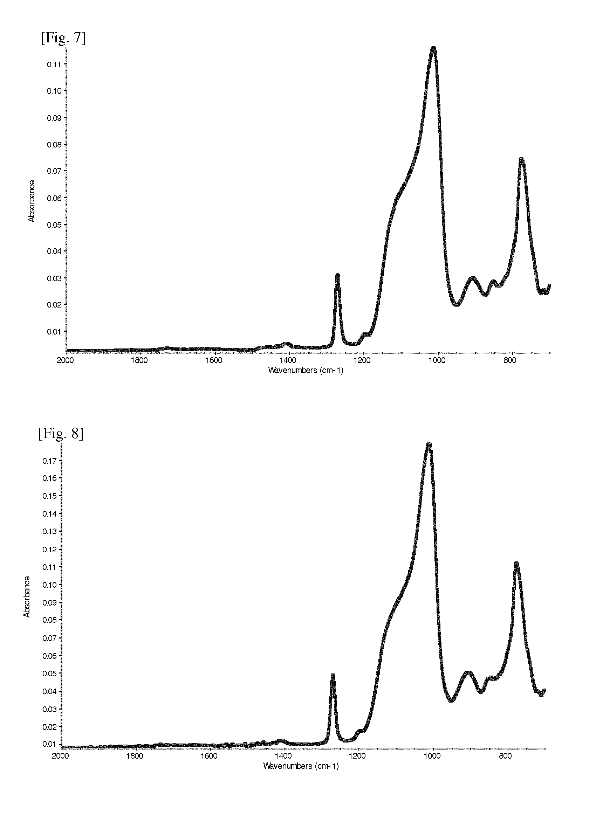

[Fig. 7] Fig. 7 is an infrared absorption spectrum of the coating film surface of the cured coating film belonging to the embodiment of the invention (Example 5);
[Fig. 8] Fig. 8 is an infrared absorption spectrum of the coating film surface of the cured coating film belonging to the embodiment of the invention (Example 7);

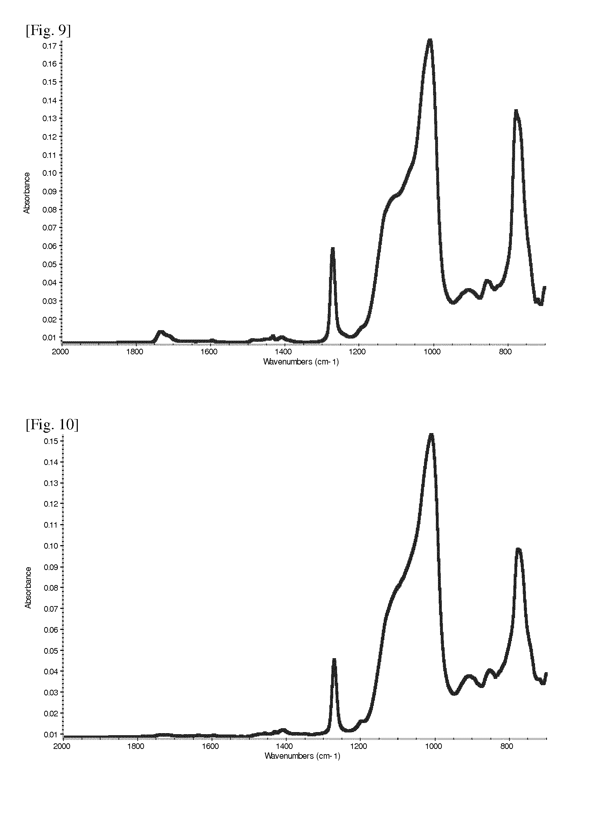

[Fig. 9] Fig. 9 is an infrared absorption spectrum of the coating film surface of the cured coating film that is not belonging to the embodiment of the invention (Comparative Example 1); and
[Fig. 10] Fig. 10 is an infrared absorption spectrum of the coating film surface of the cured coating film that is not belonging to the embodiment of the invention (Comparative Example 2).

### [BEST MODE(S) FOR CARRYING OUT THE INVENTION]

### [Component (A)]

The component (A) is a siloxane-based oligomer that is a hydrolytic condensate of a silane-based monomer containing an organoalkoxysilane represented by Formula (1) and has a weight average molecular weight of 2,000 or less

R¹ₐSi(OR²)₄₋ₐ (1)

(in which R¹ represents an organic group with 1 to 10 carbon atoms, R² represents an alkyl group with 1 to 5 carbon atoms or an acyl group with 1 to 4 carbon atoms, and a represents an integer of 1 to 3).

### [Organoalkoxysilane (1)]

The organoalkoxysilane (1) used in the invention is a compound represented by Formula (1). In the formula, R¹ represents an organic group having 1 to 10 carbon atoms. An organic group having 1 to 6 carbon atoms is more preferable. When the number of carbon atoms in R¹ is within the range, there is a tendency that the organic property of the cured coating film is relatively lowered and the strength of the coating film is increased. Examples of the organic group include an alkyl group, an alkenyl group, an alkynyl group, an acyl group, an aryl group, and a glycidyl group. More specific examples include a methyl group, an ethyl group, a propyl group, a butyl group, a vinyl group, a styryl group, an allyl group, an acetyl group, an acryloyl group, a methacryloyl group, a phenyl group, a glycidyl group, and a glycidoxypropyl group. Those groups may be substituted with at least one substituent group which is selected from a group consisting of a halogen represented by chlorine, bromine, and iodine, a hydroxyl group, a mercapto group, an isocyanate group, and an amino group. The number of the substituent groups is preferably 1 to 3, and more preferably 1.

R² represents an alkyl group with 1 to 5 carbon atoms or an acyl group with 1 to 4 carbon atoms. From the viewpoint having a fast reaction of hydrolytic condensation, an alkyl group having 1 to 2 carbon atoms is more preferable. When the number of carbon atom in R² is within the range, it is easily hydrolyzed, and thus it is easy to synthesize an oligomer and the curing degree of the coating film tends to increase.

Specific examples of the organoalkoxysilane (1) include methyltriethoxysilane, methyltrimethoxysilane, phenyltriethoxysilane, phenyltrimethoxysilane, vinyltriethoxysilane, vinyltrimethoxysilane, 3-(meth)acryloyloxypropyltriethoxysilane, 3-(meth)acryloyloxypropyltrimethoxysilane, p-styryltriethoxysilane, p-styryltrimethoxysilane, 3-aminopropyltrimethoxysilane, 3-aminopropyltriethoxysilane, 3-chloropropyltrimethoxysilane, 3-chloropropyltriethoxysilane, 3-mercaptopropyltrimethoxysilane, 3-mercaptopropyltriethoxysilane, 3-isocyanate propyltrimethoxysilane, 3-isocyanate propyltriethoxysilane, dimethyl diethoxysilane, dimethyl dimethoxysilane, trimethylmethoxysilane, triethylmethoxysilane, trimethylethoxysilane, and triethylethoxysilane. They may be used either singly or in combination of two or more types. Among them, from the viewpoint of providing the cured coating film of the invention with favorable abrasion resistance, methyltrimethoxysilane, phenyltrimethoxysilane, ethyltrimethoxysilane, and dimethyl dimethoxysilane are preferable.

The siloxane-based oligomer as the component (A) of the present invention may contain, in addition to the organoalkoxysilane (1), the silane-based monomer (1') selected from organoalkoxysilane other than the organoalkoxysilane (1), an oligomer thereof, or alkyl silicate.

Specific examples of the alkyl silicate include methyl silicate, ethyl silicate, isopropyl silicate, n-propyl silicate, isobutyl silicate, n-butyl silicate, and an oligomer thereof. Examples of the oligomer of alkyl silicate include compounds that are represented by Formula (3), for example. Among them, from the viewpoint of having a fast reaction of hydrolytic condensation, methyl silicate in which all of R⁶ to R⁹ are a methyl group and ethyl silicate in which all of R⁶ to R⁹ are an ethyl group are preferable. In Formula (3), a compound in which n is an integer of 1 to 7 is preferable. When n equals to 1 to 7, cross-linking density is high after curing so that an occurrence of cracks tends to be inhibited.

They may be used either singly or in combination of two or more types. 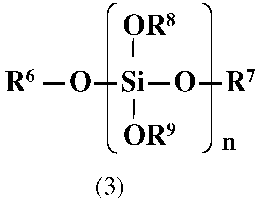 (in the formula, R⁶, R⁷, R⁸ and R⁹, which may be identical or different from each other, represent an alkyl group with 1 to 5 carbon atoms or an acyl group with 1 to 4 carbon atoms, and n represents an integer of 1 to 10).

As used herein, the expression "hydrolytic condensation" means condensation after hydrolysis, and the expression "hydrolytic condensate" means a product obtained by hydrolytic condensation.

The component (A) used in the invention is a hydrolytic condensate of the organoalkoxysilane (1), which has Mw of 2,000 or less, preferably 300 to 1,500, and more preferably 300 to 1,000.

When Mw of the component (A) is 2,000 or less, low initial haze of the cured coating film can be obtained and also adhesiveness to a substrate is improved.

Meanwhile, in the invention, Mw of the component (A) indicates a value obtained by gel permeation chromatography (GPC) in terms of polystyrene standard.

Examples of a method for hydrolyzing the organoalkoxysilane (1) and the silane-based monomer (1') include a method of dissolving organoalkoxysilane and the silane-based monomer (1') in alcohol and adding water thereto (1 to 100 mol of water per mol of monomer) followed by stirring and a method of dissolving the organoalkoxysilane (1) and the silane-based monomer (1') in alcohol and adding water (1 to 100 mol of water per mol of monomer) and acid such as hydrochloric acid and acetic acid to have an acidic mixture liquid (pH 2 to 5) followed by stirring.

In the invention, the alcohol generated during the hydrolysis may be removed from the system by distillation.

As a method for condensation which follows hydrolysis of the organoalkoxysilane (1) and the silane-based monomer (1'), there is a method of keeping a hydrolyzed mixture as it is, for example. During condensation, by controlling pH of the hydrolyzed mixture liquid to a neutral region (for example, pH 6 to 7), the condensation can be accelerated. The water generated during condensation may be removed from the system by distillation.

Further, examples of the method for condensation following hydrolysis include a method of dissolving organoalkoxysilane (1) and the silane-based monomer (1') in alcohol and stirring and heating (for example, 30 to 100°C) a mixture liquid to which water is added (1 to 100 mol of water per mol of monomer).

### [Component (B)]

The component (B) used in the invention is a compound represented by Formula (2).

R³R⁴_{b}Si(OR⁵)_{3-b} (2)

In the formula, R³ represents an organic group containing an epoxy group. R⁴ represents an organic group with 1 to 10 carbon atoms, R⁵ represents an alkyl group with 1 to 5 carbon atoms or an acyl group with 1 to 4 carbon atoms, and b represents an integer of 0 to 2.

Examples of the "organic group containing an epoxy group" as R³ include an alkyl group and an alkenyl group having 1 to 10 carbon atoms with an epoxy group, and they may be any one of a linear chain, a branched chain, or a cyclic group. The epoxy group may be present on the ring of the cyclic group like 3,4-epoxycyclohexyl, and it may also have a glycidyl group as a substituent group like 3-glycidoxypropyl group. Examples of the "organic group having 1 to 10 carbon atoms" as R⁴ include an alkyl group and an alkoxy group having 1 to 10 carbon atoms.

Specific examples of the component (B) include 2-(3,4-epoxycyclohexyl)ethyltriethoxysilane, 2-(3,4-epoxycyclohexyl)ethyltrimethoxysilane, 3-glycidoxypropylmethyl dimethoxysilane, 3-glycidoxypropylmethyl diethoxysilane, 3-glycidoxypropyltriethoxysilane, and 3-glycidoxypropyltrimethoxysilane. They may be used either singly or in combination of two or more types.

As for the component (B), from the viewpoint of having favorable abrasion resistance of a surface which forms a surface of a laminate consisting of the cured coating film of the invention, 3-glycidoxypropyltrimethoxysilane and 3-glycidoxypropyltriethoxysilane are preferable.

In the invention, if necessary, organosilane containing an epoxy group other than Formula (2) may be included as the component (B).

In the invention, depending on the organic property of the component (A) and polarity of silanol in the component (A) and also polarity of a solvent for a case in which solvents described below are used, those obtained by hydrolyzing all or part of the alkoxy groups to adjust polarity may be used as the component (B). By using those obtained by hydrolyzing part of the alkoxy groups to adjust polarity as the component (B), favorable adhesiveness of the cured coating film to be obtained to a substrate can be obtained.

### [Component (C)]

The component (C) used in the invention is an organic polymer having a weight average molecular weight of 30,000 or more.

Mw of (C) is preferably 30,000 to 2,000,000, and more preferably 100,000 to 1,000,000. When Mw is 30,000 or more, adhesiveness to a substrate tends to improve. Further, when Mw is 2,000,000 or less, transparency of the cured coating film tends to improve.

Meanwhile, in the present invention, Mw of the component (C) indicates a value obtained by gel permeation chromatography (GPC) in terms of polystyrene standard.

From the viewpoint of transparency, the organic polymer used in the invention is, although not specifically limited, preferably a resin with good transparency, and examples thereof include a poly(meth)acrylic acid ester resin, a polystyrene resin, a saturated polyester resin, an unsaturated polyester resin, and a polycarbonate resin. They may be used either singly or in combination of two or more types.

From the viewpoint of a dissolving property in a solvent, transparency, and easiness of molecular design to control melt temperature or the like, a poly(meth)acrylic acid ester resin is preferably used as the component (C).

Examples of the monomer used for obtaining a poly(meth)acrylic acid ester resin include methyl (meth)acrylate, ethyl (meth)acrylate, i-propyl (meth)acrylate, n-butyl (meth)acrylate, i-butyl (meth)acrylate, t-butyl (meth)acrylate, cyclohexyl (meth)acrylate, 2-ethylhexyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, n-lauryl (meth)acrylate, n-stearyl (meth)acrylate, and cyclohexyl (meth)acrylate. They may be used either singly or in combination of two or more types.

In the invention, the monomer used for obtaining a poly(meth)acrylic acid ester resin may be used, if necessary, in combination with a monomer which is capable of co-polymerizing with the monomers described above. Examples of the monomer which is capable of co-polymerizing with the monomers described above include a vinyl monomer containing a carboxyl group such as methacrylic acid, acrylic acid, crotonic acid, fumaric acid, maleic acid, itaconic acid, and sorbic acid, an acid anhydride such as maleic anhydride and itaconic anhydride, a maleimide derivative such as N-phenyl maleimide, N-cyclohexyl maleimide, and N-butyl maleimide, a vinyl monomer having a carbonyl group that is based on an aldehyde group or a keto group such as acrolein, diacetone acrylamide, formyl styrol, vinyl methyl ketone, vinyl ethyl ketone, vinyl isobutyl ketone, diacetone acrylate, diacetone methacrylate, acetonyl acrylate, acryloxyalkylpropenal, and methacryloxyalkylpropenal, a vinyl monomer containing an amide group such as methacrylamide, acrylamide, crotonamide, and N-methylolacrylamide, a vinyl monomer containing an epoxy group such as allyl glycidyl ether, glycidyl acrylate, and glycidyl methacrylate, an unsaturated monomer containing silicon such as γ-acryloyloxypropyltrimethoxysilane, γ-acryloyloxypropyltriethoxysilane, γ-acryloyloxypropylmethyl dimethoxysilane, γ-acryloyloxypropylmethyl diethoxysilane, γ-acryloyloxypropylethyl dimethoxysilane, β-acryloyloxyethyltrimethoxysilane, β-acryloyloxyethylmethyl dimethoxysilane, γ-methacryloyloxypropyltrimethoxysilane, γ-methacryloyloxypropyltriethoxysilane, γ-methacryloyloxypropylmethyl dimethoxysilane, γ-methacryloyloxypropylmethyl diethoxysilane, γ-methacryloyloxypropylethyl dimethoxysilane, γ-methacryloyloxypropyl dimethylmethoxysilane, β-methacryloyloxyethyltrimethoxysilane, β-methacryloyloxyethylmethyl dimethoxysilane, vinyltrimethoxysilane, vinyltriethoxysilane, vinyltri-n-butoxysilane, vinyltris(β-methoxyethoxy)silane, vinylmethyl dimethoxysilane, vinylmethyl diethoxysilane, vinylethyltrimethoxysilane, vinyl dimethylmethoxysilane, isopropenyltrimethoxysilane, isopropenylmethyl dimethoxysilane, allyltrimethoxysilane, 5-hexenyltrimethoxysilane, and 9-decenyltrimethoxysilane, an aromatic vinyl monomer such as styrene and α-methyl styrene, a vinyl monomer containing a nitrile group such as acrylonitrile, and an olefin-based monomer such as butadiene. Further, if necessary, a cross-linking agent such as ethylene glycol diacrylate, ethylene glycol dimethacrylate, allylacrylate, allylmethacrylate, divinylbenzene, and trimethylol propanetriacrylate can be used.

Among the poly(meth)acrylic acid ester resins that are used as the component (C), from the viewpoint of having easy phase separation of a cured film, a polymer having no reactive functional group in a side chain or a polymer having low content of a reactive functional group to the extent the phase separation is not inhibited is preferable. Among them, from the viewpoint of transparency, glass transition temperature, hardness and adhesiveness to a substrate of the cured coating film, methyl polymethacrylate is preferable.

As described herein, the term "reactive functional group" indicates a functional group having reactivity with silanol or alkoxysilane.

In the invention, the term "silanol" represents a compound produced by hydrolyzing at least one selected from alkyl silicates of the component (A) and the component (B). When there is alkyl silicate represented by Formula (3), compounds produced by hydrolyzing alkyl silicate represented by Formula (3) are also encompassed by the "silanol". The "alkoxysilane" means a compound remaining as non-hydrolyzed product of at least one selected from the component (A) and the component (B). When there is alkyl silicate represented by Formula (3), compounds remaining as non-hydrolyzed product of alkyl silicate represented by Formula (3) are also encompassed by the "alkoxysilane". Examples of the "functional group having reactivity with silanol or alkoxysilane" include a silanol group, an alkoxysilyl group, a hydroxyl group, an amino group, and an epoxy group.

Examples of the organic polymer having a reactive functional group include a (meth)acryl-based resin containing a monomer unit of an alkoxysilyl group-containing monomer such as 3-methacryloxypropyltrimethoxysilane and 3-acryloxypropyltrimethoxysilane, a (meth)acryl-based resin containing a monomer unit of an epoxy group-containing monomer such as glycidyl(meth)acrylate, and a (meth)acryl-based resin containing a monomer unit of an hydroxyl group-containing monomer such as 2-hydroxyethyl(meth)acrylate.

Further, examples of the polymer other than the (meth)acryl-based resin include polyester polyol, an epoxy resin, and polyvinyl alcohol.

If an organic polymer having reactivity with silanol or alkoxysilane is used in the component (C), separation between an inorganic layer and an organic layer may be incomplete or they are admixed with each other to yield a homogeneous state, causing non-alignment of the organic polymer in the organic layer having adhesiveness to a plastic substrate.

Meanwhile, as described herein, "(meth)acrylic acid" and "(meth)acrylate" mean "acrylic acid" or "methacrylic acid" and "acrylate" or "methacrylate", respectively.

As for the component (C), from the viewpoint of a dissolving property in a solvent, transparency, and easiness of molecular design to control melt temperature or the like, polyalkyl(meth)acrylate is preferable.

Examples of the monomer to be used for obtaining polyalkyl(meth)acrylate include methyl(meth)acrylate, ethyl(meth)acrylate, i-propyl (meth)acrylate, n-butyl (meth)acrylate, i-butyl (meth)acrylate, t-butyl (meth)acrylate, cyclohexyl(meth)acrylate, and 2-ethylhexyl (meth)acrylate. They may be used either singly or in combination of two or more types.

### [Component (D)]

The component (D) used in the invention indicates a compound which generates an acid by the irradiation of active energy rays such as visible rays, ultraviolet rays, thermal rays, and electron rays and induces a polycondensation reaction between the component (A) and the component (B).

As for the component (D), those capable of generating an acid by the irradiation of visible rays or ultraviolet rays are preferable from the viewpoint of forming the cured coating film in a short time.

As for the component (D), those capable of generating an acid by visible rays and ultraviolet rays and also by heat are preferable from the viewpoint of increasing the curing degree during the heating process for evaporating the solvent.

Examples of the component (D) include a diazonium salt, iodonium salt, sulfonium salt, phosphonium salt, selenium salt, oxonium salt, and ammonium salt.

Specific examples of the component (D) include IRGACURE 250 (trade name, manufactured by Ciba Specialty Chemicals K. K.), ADEKA Optomer SP-150 and ADEKA Optomer SP-170 (trade names, manufactured by ADEKA Co., Ltd.), CYRACURE UVI-6970, CYRACURE UVI-6974, CYRACURE UVI-6990, CYRACURE UVI-6950 (trade names, manufactured by Union Carbide Corp. U.S.A.), DAICAT II (trade name, manufactured by Daicel Chemical Industries, Ltd.), UVAC1591 (trade names, manufactured by Dicel-UCB Co., Ltd.), and CI-2734, CI-2855, CI-2823, and CI-2758 (trade names, manufactured by Nippon Soda Co., Ltd.). They may be used either singly or in combination of two or more types.

As for the component (D), examples of those capable of generating an acid also by heat include SAN-AID SI-60L, SAN-AID SI-80L, SAN-AID SI-100L and SAN-AID SI-150L (trade names, manufactured by SANSHIN CHEMICAL INDUSTRY CO., LTD.). They may be used either singly or in combination of two or more types.

In the invention, a light sensitive acid generating agent having sensitivity only to light is used as the component (D), and depending on purpose, a heat sensitive acid generating agent having sensitivity only to heat may be used in combination.

As a method for measuring a temperature at which the component (D) or a heat sensitive acid generating agent generates an acid, there is a method of measuring the epoxy resin added with the component (D) or a heat sensitive acid generating agent by using differential scanning calorimetry (DSC).

### [Curable composition]

The curable composition of the invention contains the component (A), the component (B), the component (C), and the component (D).

Regarding the blending amount of the component (A) and the component (B) in the composition, the solid content of the component (B) is preferably 3 to 200 parts by mass, and more preferably 10 to 100 parts by mass per 100 parts by mass of the solid content of the component (A). When the solid content of the component (B) is 3 parts by mass or more, weather resistance of the cured coating film tends to improve. On the other hand, when the solid content of the component (B) is 200 parts by mass or less, decrease in hardness of the cured coating film and decrease in adhesiveness of the cured coating film to a substrate can be suppressed.

Meanwhile, the solid content of the component (A) or the component (B) indicates the theoretical amount of the structure after condensation which is based on the component (A) or the component (B) after completion of the condensation of the component (A) or the component (B).

The blending amount of the component (C) is, per total amount (that is., 100 parts by mass) of the solid contents of the component (A) and the component (B), preferably 3 to 50 parts by mass, and more preferably 5 to 30 parts by mass. When the blending amount of the component (C) is 3 parts by mass or more, adhesiveness of the cured coating film to a substrate tends to improve. On the other hand, when the blending amount of the component (C) is 50 parts by mass or less, abrasion resistance of the cured coating film tends to improve.

The blending amount of the component (D) is, per total amount (that is, 100 parts by mass) of the solid contents of the siloxane-based oligomer (A) and the epoxy group-containing alkoxysilane (B), preferably 0.01 to 10 parts by mass, and more preferably 0.1 to 8 parts by mass. When the blending amount of the component (D) is 0.01 parts by mass or more, curability of the composition tends to improve in accordance with the irradiation of active energy rays. On the other hand, when the blending amount of the component (D) is 10 parts by mass or less, there is a tendency of obtaining a cured coating film having little coloration and low reduction in physical properties of the coating film.

In the present invention, for the purpose of adjusting the solid content concentration, increasing the dispersion stability, improving the application (coating) properties, and improving the adhesiveness of the curable composition to a substrate, a solvent may be contained in the curable composition.

Further, if necessary, inorganic particles, dyestuffs, pigments, pigment dispersing agents, flow adjusting agents, leveling agents, anti-foaming agents, UV absorbers, light stabilizers, or antioxidants may be added to the curable composition.

### [Solvent]

Examples of the solvent which may be contained in the curable composition include alcohol, ketone, ether, ester, cellosolve, and an aromatic compound.

Specific examples of the solvent include methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)ethanol, 2-butoxyethanol, furfuryl alcohol, tetrahydrofurfuryl alcohol, diethylene glycol, diethylene glycol monomethyl ether, diethylene glycol monoethyl ether, diethylene glycol monobutyl ether, 1-methoxy-2-propanol, 1-ethoxy-2-propanol, dipropylene glycol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ether, dipropyl ether, diisopropyl ether, dibutyl ether, dihexyl ether, anisole, phenetole, tetrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerin ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethyl butyl acetate, 2-ethyl hexyl acetate, methyl propionate, ethyl propionate, butyl propionate, γ-butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, and xylene. They may be used either singly or in combination of two or more types.

The content of the solvent in the curable composition is preferably 10 to 1,000 parts by mass per 100 parts by mass of the total amount of the components (A) to (D). When the content of the solvent is 10 parts by mass or more, there is a tendency that the storage stability of the curable composition is improved, and as the viscosity of the curable composition does not increase to an excessively high value, a good coating film is obtained. Meanwhile, when the content of the solvent is 1,000 parts by mass or less, there is a tendency that problems that the solid content of the curable composition is too low and thus the thickness of a coated film is too thin hardly occur, and thus abrasion resistance of the cured coating film is improved.

According to the invention, by forming a coated film after application of the curable composition on a surface of the substrate described below and curing it, a laminate having the cured coating film laminated on a substrate surface can be obtained.

### [Substrate]

Examples of the substrate which is used in the invention include a plastic, metal, paper, wood, and an inorganic material. Among them, a plastic substrate such as methyl polymethacrylate, polycarbonate, polystyrene, and a copolymer of methyl methacrylate and styrene are preferable.

In the present invention, a substrate having a primer layer formed on a substrate surface can be also used, if necessary.

Examples of the primer layer include those obtained by applying and curing a photocurable primer containing polyfunctional acrylate.

### [Coated film]

The coated film of the present invention is obtained by applying the curable composition on a substrate surface.

Examples of the method of applying the curable composition of the invention on a substrate include a dipping method, a spray method, a bar coating method, a roll coating method, a gravure printing, a flexographic printing, a screen printing, a spin coating method, a flow coating method, and a method of electrostatic spray coating.

### [Cured coating film]

The cured coating film of the invention is obtained by curing the coated film applied on a surface of a substrate or the like as described above.

The cured coating film of the invention has favorable appearance and excellent abrasion resistance.

Further, the cured coating film has excellent cracking resistance and weather resistant adhesiveness.

The cured coating film of the invention has a structure with at least two layers including a surface layer and an innermost layer, in which the surface layer is formed on a surface of the laminate on which the cured coating film is present, and it contains relatively a large amount of the siloxane-based polymer compared to the innermost layer. Meanwhile, the innermost layer is formed on a surface of the cured coating film which is in contact with the substrate, and it contains relatively a large amount of the organic polymer compared to the surface layer. Meanwhile, as described herein, the term "innermost layer" indicates an inner layer which is present in contact with a substrate. In the present invention, if necessary, at least one intermediate layer in which the siloxane-based polymer and (C) the organic polymer are admixed with each other may be present between the surface layer and the innermost layer.

Presence or absence of a layer structure (surface layer and innermost layer) in the cured coating film and thickness of each layer may be determined based on transmission image of the cross section of the cured coating film by using transmission electron microscope (TEM). Further, according to a total reflectance (ATR) based on IR spectroscopy, IR absorption spectrum of the surface layer and the innermost layer of the cured coating film which is obtained by peeling it from the substrate can be measured, and therefore the expected layer structure of the cured coating film can be obtained. Meanwhile, examples of the method for obtaining a cured coating film peeled from a substrate include a method of obtaining a cured coating film peeled from a substrate after a weather resistance test for a long period of time or a method of peeling a cured coating film after producing a laminate by using a substrate having low adhesiveness to a cured coating film such as a Teflon plate.

According to TEM observation, strong or weak contrast can be observed according to transmission and scattering of electron ray. Degree of the scattering is increased in accordance with an increase in density or thickness of a sample and also an increase in weight of the included atoms. Since metal oxides include metal atoms with high density and heavy weight, their scattering angle is higher than that of an organic matter, and an image with darker shade is shown compared to the organic matter. The component (A) and the component (B) as a siloxane-based polymer show a dark image while the component (C) shows a vague image under observation.

Regarding the cured coating film of the invention, the surface layer containing the siloxane-based polymer in relatively a large amount compared to the inner most layer shows strong contrast and the inner most layer containing (C) the organic polymer component in relatively a large amount compared to the surface layer shows weak contrast under observation. Further, if there is an intermediate layer, a portion with strong contrast and a portion with weak contrast are present as a mixture or an intermediate contrast is shown under observation.

According to a total reflectance (ATR with single reflectance) based on IR spectroscopy, infrared absorption measurement can be made for the depth region which is sub µm to 1 µm deep from the surface layer, although it may vary depending on wave number.

When the main component of the outermost layer is a siloxane-based polymer, strong absorption originating from the siloxane bond is detected near 1020 cm⁻¹. However, the absorption of the carbonyl group (for a case in which (C) the organic polymer is PMMA) near 1730 cm⁻¹ originating from (C) the organic polymer is either not detected or detected at very low level.

The IR spectrum obtained by total reflectance measurement of the cured coating film of the invention shows strong absorption originating from a siloxane bond with almost no absorption originating from a carbonyl group.

Thickness of the cured coating film of the invention is generally from 0.5 to 50 µm or so.

When the cured coating film of the invention has the surface layer and the innermost layer as described above, thickness of the surface layer is preferably from 0.5 to 30 µm, and more preferably 1 to 15 µm. When the thickness of the surface layer is 0.5 µm or more, there is a tendency that hardness and abrasion resistance of the cured coating film can be improved. Further, when the thickness of the surface layer is 30 µm or less, there is a tendency that cracking resistance of the cured coating film can be improved. When the cured coating film of the invention has the surface layer and the innermost layer as described above, thickness of the innermost layer is preferably from 0.05 to 10 µm. When the thickness of the innermost layer is 0.05 µm or more, there is a tendency that adhesiveness of the cured coating film to a substrate can be improved. Further, when the thickness of the innermost layer is 10 µm or less, there is a tendency that hardness of the cured coating film can be improved.

### [Method for producing laminate]

The laminate of the invention is obtained by applying the curable composition on a substrate surface and irradiating the obtained coated film with active energy ray to cure the coated film.

Examples of the active energy ray include visible ray, vacuum ultraviolet ray, ultraviolet ray, and electron ray.

Specific examples of the active energy ray include light emitted from a light source such as a low pressure mercury lamp, medium pressure mercury lamp, high pressure mercury lamp, ultra-high pressure mercury lamp, incandescent electric lamp, xenon lamp, halogen lamp, carbon arc lamp, metal halide lamp, fluorescent lamp, tungsten lamp, gallium lamp, excimer laser, or sun light. Among them, light emitted from a light source such as a low pressure mercury lamp, medium pressure mercury lamp, high pressure mercury lamp, ultra-high pressure mercury lamp, and metal halide lamp is preferable.

The active energy rays may be used either singly or in combination of two or more types.

Irradiation energy amount of the active energy ray is, for irradiation of ultraviolet ray, for example, preferably 100 to 5,000 mJ/cm² in terms of an integrated quantity of light.

In the present invention, it is also possible to perform irradiation of active energy rays under heating, if necessary. According to irradiation of active energy ray at high temperature, curing can be promoted.

Examples of the method of heating which is carried out in conjunction with the irradiation of active energy ray include irradiation using an infrared heater and cyclic heating using hot air.

Specific examples for obtaining the cured coating film of the invention include the following method.

First, the composition containing a solvent and the component (D) which generates an acid by heat is applied on a substrate surface to form a coated film, and a setting for evaporating a solvent by heating the coated film at a temperature which is equal to or higher than the temperature at which the active energy ray-sensitive acid generating agent generates an acid by heat is run.

Subsequently, the coated film is irradiated with active energy ray to form a laminate having a cured coating film.

At the time of curing the curable composition of the invention, dehydrating condensation of the component (A) and the component (B) or condensation caused by dealcohol reaction occurs, and thus the silanol or alkoxysilane in the curable composition needs to be associated with neighboring molecules for the reaction.

In this regard, by using the component (D) which generates an acid by heat in the curing composition of the invention and heating at a temperature which is equal to or higher than the temperature at which the component (D) generates an acid by heat in a setting stage in which the coated film has fluidity, the silanol or alkoxysilane can be efficiently associated with each other, yielding higher curing degree. By having increased curing degree, the abrasion resistance and cracking resistance can be improved.

Examples of the setting method include a method using a hot air dryer.

Conditions for the setting can be either a setting at singe temperature condition or a setting with two or more conditions (stages) in which temperature is different, if necessary.

The setting temperature is preferably a temperature which is equal to or higher than the temperature at which the component (D) generates an acid by heat.

For a setting with two or more conditions (stages), it is sufficient that in at least one setting the temperature is equal to or higher than the temperature at which the component (D) generates an acid by heat. Specific examples of the setting include a setting at 60 to 120°C for 1 to 30 minutes. According to heating for 1 minute or longer, the solvent tends to be evaporated more sufficiently. Further, according to heating for 30 minutes or shorter, the productivity tends to be maintained at high level.

In the invention, if necessary, post curing by heating for a short period of time may be carried out after curing the curable composition by the irradiation of active energy ray on a coated film.

By reducing a non-cured product remaining in the composition by post curing by heating, the cracking resistance and abrasion resistance of the obtained cured coating film can be improved.

Further, the adhesiveness of the cured coating film to a substrate can be improved in accordance with post curing by heating.

### [EXAMPLES]

Hereinafter, the present invention is described by Examples. In the following description, "%" represents "% by mass", unless specifically described otherwise. Meanwhile, the solid content of the condensate that is obtained as follows means a theoretical amount of a post-condensation structure based on the reacting material which is present at the time of having completed condensation.

In addition, Mw of the oligomer, acid generating-temperature of an acid generating agent, initial appearance, total light transmittance, initial haze, pencil hardness, initial adhesiveness, abrasion resistance, hot water test, and weather resistance test of the cured coating film in a laminate having the cured coating film laminated on a substrate surface, and layer structure of the cured coating film were evaluated according to the methods described below.

### (1) Mw

Mw of the oligomer was measured by gel permeation chromatography (GPC) under the following conditions.

### <Condition for GPC measurement>

Apparatus: HPLC manufactured by Waters (515 HPLC Pump, 2414 RI detector)
Column:
   - TSKgel: GMHXL (size: 7.8 mmφ x 300 mm) x 2 columns
   - TSKgel: G1000HXL (size: 7.8 mmφ x 300 mm) x 1 column
Eluent: tetrahydrofuran
Flow rate: 1.0 mL/minute
Oven temperature: 40°C

### (2) Acid generating temperature

As a method for measuring the temperature at which the component (D) or a heat sensitive acid generating agent generates an acid, there is a method of indirectly deducing it from the temperature at which heat generation is started by an epoxy resin added with the component (D) or a heat sensitive acid generating agent as measured by differential scanning calorimetry (DSC). However, for a commercially available acid generating agent, it can be generally known from a technical brochure published by the manufacturer.

### (3) Initial appearance

Surface transparency or absence or presence of cracks or whitening of the cured coating film of the laminate was observed to evaluate initial appearance.

### (4) Total light transmittance and initial haze

NDH-2000 Haze Meter (trade name) manufactured by NIPPON DENSHOKU INDUSTRIES Co., LTD. was used. At three points on surface of the cured coating film of the laminate, total light transmittance and initial haze were measured and each average value thereof was obtained.

When the initial haze is more than 1.0%, white color can be recognized even with a naked eye, and therefore it is preferably 1.0% or less.

### (5) Pencil hardness

Pencil hardness of the surface of the cured coating film of the laminate was evaluated with reference to JIS-K5600 (pencil scratch test).

### (6) Initial adhesiveness

Eleven cuts were made with a razor blade on a surface of the cured coating film of the laminate in both lengthwise and crosswise directions at an interval of 1 mm to form 100 checkers. Thereafter, a cellophane tape was closely adhered on the surface, and then it was rapidly peeled off at an angle of 45 degrees in forward direction. The number of the checkers containing the cured coating film remained thereon was counted. For the recording, if there are 30 checkers remaining among one hundred checkers, for example, it is expressed as 30/100.

### (7) Abrasion resistance

Surface of the cured coating film of the laminate was subjected to a reciprocative scrubbing 10 times with a #0000 steel wool under a pressure of 9.8 x 10⁴ Pa, the extent of scratch produced in an area of 1 cm x 1 cm on the surface was observed, and the abrasion resistance was evaluated according to the following criteria:
A: 0 to 9 scratches (there is a glossy surface)
B+: 10 to 49 scratches (there is a glossy surface)
B-: 50 to 99 scratches (there is a glossy surface)
C: 100 or more scratches (there is a glossy surface)
D: There is no glossy surface

Further, with reference to JIS K7136, the haze value was measured before and after the scrubbing test using a steel wool, and the abrasion resistance was evaluated as ΔHz in terms of the increase in haze value.

### (8) Hot water test

A test specimen of the laminate was immersed in hot water and heated for 2 hours at 90°C. Subsequently, the test specimen was taken out and visually observed whether there were cracks. Hot water cracking resistance was evaluated according to the following criteria.

### <Cracking resistance to hot water>

○: There are no cracks.
x: Cracks have occurred.

Further, the test specimen of the laminate was immersed in hot water and heated for 2 hours at 90°C. Subsequently, the adhesiveness test which is the same as the initial adhesiveness test was carried out and the hot water adhesiveness was evaluated.

### (9) Weather resistance test

A test specimen of the laminate was tested under the following conditions by using a metal weather resistance tester (KW-R5TP type, manufactured by DAIPLA WINTES CO., LTD.). The test specimen obtained after 100 hours was subjected to the adhesiveness test which is the same as the initial adhesiveness test to evaluate the weather resistant adhesiveness. Further, the test specimen after the exposure for 100 hours was visually observed whether there were any cracks. The weather resistant cracking resistance was accordingly evaluated based on the following criteria.

### <Exposure condition>

### Exposure cycle

· Irradiation: temperature of 63°C, humidity of 70%, UV irradiation; 4 hours (energy for irradiation: 140 mW/cm²)
· Dew formation: temperature of 70°C, humidity of 90%, for 4 hours
· Darkness: temperature of 30°C, humidity of 98%, and 30 second shower before and after the darkness.

### <Weather resistant cracking resistance>

"No": There are no cracks
"Yes": Cracks have occurred.

### (10) Layer structure of cured coating film

The layer structure of the cured coating film can be observed under a transmission electron microscope.

Cross section of the laminate was cut to a size of about 70 to 150 nm using a diamond knife to give an extremely thin specimen, which was then observed under a transmission electron microscope.

### <Transmission electron microscope>

Apparatus: transmission electron microscope manufactured by JEOL Ltd.
Voltage for acceleration: 100 to 120 kV
Magnification: 1,000 to 5,000 times
Further, the composition of the surface of the coated film can be determined by infrared spectroscopy.

### <Infrared spectroscopy>

Apparatus: Fourier transform infrared spectrophotometer manufactured by Nicolet Corporation
Measurement method: ATR method with single reflectance
Crystal: germanium.

### [Synthetic example 1] Synthesis of the oligomer (A-1)

Methyltrimethoxysilane (manufactured by Tama Chemicals Co., Ltd., product name: methyltrimethoxysilane) 90.0 g, phenyltrimethoxysilane (manufactured by Shin-Etsu Chemical Co., Ltd., product name: KBM-103) 10.0 g, and isopropyl alcohol 75 g were mixed by stirring to give a homogeneous solution. At that time, the molar addition ratio is such that (methyltrimethoxysilane)/(phenyltrimethoxysilane) = 93/7.

To the above solution, 75.0 g of water was added and heated for 5 hours at 80°C under stirring for performing hydrolytic condensation. As a result, a solution of the oligomer (A-1) having the solid content of 20% was obtained. Mw of the oligomer (A-1) was about 650.

### [Synthetic example 2] Synthesis of the oligomer (A-2)

Methyltrimethoxysilane (manufactured by Tama Chemicals Co., Ltd., product name: methyltrimethoxysilane) 30.0 g, phenyltrimethoxysilane (manufactured by Shin-Etsu Chemical Co., Ltd., product name: KBM-103) 2.4 g, tetramethoxysilane (manufactured by Tama Chemicals Co., Ltd., product name: methyl orthosilicate) 1.9 g, and isopropyl alcohol 20.2 g were mixed by stirring to give a homogeneous solution. At that time, the molar addition ratio is such that (methyltrimethoxysilane)/(phenyltrimethoxysilane)/(tetramethoxysilane) = 90/5/5.

To the above solution, 20.2 g of water was added and heated for 5 hours at 80°C under stirring for performing hydrolytic condensation. As a result, a solution of the oligomer (A-2) having the solid content of 23% was obtained. Mw of the oligomer (A-2) was about 500.

### [Synthetic example 3] Synthesis of the oligomer (A-3)

Methyltrimethoxysilane (manufactured by Tama Chemicals Co., Ltd., product name: methyltrimethoxysilane) 17.2 g, methyl silicate (manufactured by COLCOAT CO., Ltd., approximately a heptamer on average, average molecular weight of about 789, product name: methyl silicate 53A) 10.0 g as alkyl silicate, and isopropyl alcohol 10.0 g were mixed by stirring to give a homogeneous solution. At that time, the molar addition ratio is such that (methyltrimethoxysilane)/(methyl silicate 53A) = 91/9 (average value).

To the above solution, 10.5 g of water was added and heated for 3 hours at 80°C under stirring for performing hydrolytic condensation.

Subsequently, the obtained reaction solution was cooled to 25°C, and stirred again for 24 hours to perform condensation.

Further, the final reaction solution obtained from above was added with isopropyl alcohol to have the total amount of 69.0 g, and a solution of the oligomer (A-3) having the solid content of 20% was obtained. Mw of the oligomer (A-3) was about 6,600.

### [Synthetic example 4] Synthesis of the oligomer (A-4)

Methyltrimethoxysilane (manufactured by Tama Chemicals Co., Ltd., product name: methyltrimethoxysilane) 17.2 g, methyl silicate (manufactured by COLCOAT CO., Ltd., approximately a heptamer on average, average molecular weight of about 789, product name: methyl silicate 53A) 10.0 g as alkyl silicate, and isopropyl alcohol 10.0 g were mixed by stirring to give a homogeneous solution. At that time, the molar addition ratio is such that (methyltrimethoxysilane)/(methyl silicate 53A) = 91/9 (average value).

To the above solution, 10.5 g of water was added and heated for 3 hours at 80°C under stirring for performing hydrolytic condensation.

Further, the reaction solution obtained from above was added with isopropyl alcohol to have the total amount of 69.0 g, and a solution of the oligomer (A-4) having the solid content of 20% was obtained. Mw of the oligomer (A-4) was about 5,900.

### [Synthetic example 5] Preparation of dispersing agent (a)

To a flask equipped with a stirrer, a condenser tube, and a thermometer, 900 parts of deionized water, 60 parts of sodium 2-sulfoethyl methacrylate, 10 parts of potassium methacrylate, and 12 parts of methyl methacrylate were added and stirred. It was heated to 50°C while flushing the inside of the flask with nitrogen. Subsequently, 0.08 parts of 2,2'-azobis(2-methylpropionicamidine) dihydrochloride salt were added to the flask as a polymerization initiator and heated again to 60°C. After the heating, 18 parts of methyl methacrylate were continuously added dropwise at rate of 0.24 parts/minute by using a dropping pump. The obtained reaction solution was kept at 60°C for 6 hours and then cooled to room temperature to give the dispersing agent (a) having the solid content of 10% as a transparent aqueous solution.

### [Synthetic example 6] Preparation of chain transfer agent (b)

To a flask equipped with a stirrer, cobalt (II) acetate tetrahydrate 1.00 g, diphenylglyoxime 1.93 g, and diethyl ether 80 ml which has been de-oxygenized in advance by nitrogen bubbling were added under a nitrogen atmosphere and then stirred for 30 minutes at room temperature. Subsequently, 10 ml of boron trifluoride diethyl ether complex was added thereto and stirred again for 6 hours. The obtained reactants were filtered. The solid content was washed with diethyl ether and dried in vacuo for 15 hours to give 2.12 g of a chain transfer agent (b) as a reddish brown solid.

### [Synthetic example 7] Synthesis of polymer solution-3

To a flask equipped with a stirrer, a condenser tube, and a thermometer, 145 parts by weight of de-ionized water, 0.1 parts by weight of sodium sulfate, and 0.25 parts by weight of the dispersing agent (a) were added, and stirred to give a homogenous aqueous solution. Subsequently, a monomer mixture containing 100 parts by weight of methyl methacrylate, 0.01 parts by weight of the chain transfer agent (b), and 0.8 parts by weight of 2,2'-azobis(2-methylbutyronitrile) was added to the flask to give an aqueous suspension. After that, inside of the flask was flushed with nitrogen, and the reaction was allowed to occur for about 1 hour after raising the temperature to 80°C. To further increase the polymerization rate, the temperature was raised to 93°C and maintained for 1 hour. After that, the reaction solution was cooled to 40°C to give an aqueous polymer suspension. The aqueous polymer suspension was filtered through a Nylon filter with mesh size of 45 µm. The filtrate was then washed with de-ionized water, dehydrated, and dried for 16 hours at 40°C to give a polymer, which has Mw of 3,100. The polymer was then dissolved with γ-butyrolactone to give the polymer solution-3 having solid content of 10%.

### [Synthetic example 8] Synthesis of polymer solution-4

To a flask equipped with a stirrer, a condenser tube, and a thermometer, 30 parts by weight of methyl methacrylate, 70 parts by weight of γ-butyrolactone, and 0.6 parts by weight of 2,2'-azobis(isobutyronitrile) were added and stirred to give a homogenous solution. After bubbling with nitrogen gas, the temperature was raised to 80°C, and the reaction was allowed to occur for 5 hours. After the reaction is completed, it was cooled to room temperature to give a polymer with solid content of 30%. Mw was 21,000.

### [Preparation example 1] Preparation of polymer solution-1

The polymer solution-1 in which 1.0 g of methyl polymethacrylate (DAIANAL BR-85, Mw 280,000, manufactured by Mitsubishi Rayon Co., Ltd.) as (C) the organic polymer is dissolved in 9.0 g of γ-butyrolactone was obtained.

### [Preparation example 2] Preparation of polymer solution-2

The polymer solution-2 in which 1.0 g of methyl polymethacrylate (DAIANAL BR-83, Mw 40,000, manufactured by Mitsubishi Rayon Co., Ltd.) as (C) the organic polymer is dissolved in 9.0 g of γ-butyrolactone was obtained.

### [Preparation example 3] Preparation of coating liquid A

20.0 g of 20% solution of the oligomer (A-1) (4.0 g in terms of solid content) as (A) the siloxane-based oligomer, 2.4 g of γ-glycidoxypropyl trimethoxysilane (manufactured by Shin-Etsu Chemical Co., Ltd., product name: KBM-403) as (B) the alkoxysilane containing an epoxy group, 5.8 g of the polymer solution-1 (0.58 g in terms of solid content) as (C) the organic polymer, and 0.2 g of a solution of sulfonium salt-based acid generating agent (manufactured by SANSHIN CHEMICAL INDUSTRY CO., LTD., product name: SAN-AID SI-80L, 50% γ-butyrolactone solution) (0.1 g in terms of solid content) as (D) the active energy ray-sensitive acid generating agent were admixed with one another.

To the mixture liquid described above, 0.6 g of 1% γ-butyrolactone solution containing a leveling agent (manufactured by Dow Coming Toray Co., Ltd., product name: L-7001) (0.006 g in terms of solid content) and 6.9 g of γ-butyrolactone were admixed followed by mixing under stirring to give the coating liquid A as an active energy ray-curable composition. The temperature at which the used active energy ray-sensitive acid generating agent generates an acid is about 70°C.

### [Preparation example 4 to 13] Preparation of coating liquid B to K

With the ratio listed in Table 1, the component (A), the component (B), the component (C), the component (D), a solvent, and a leveling agent were admixed with one another and then stirred so as to be homogeneous, and the coating liquid B to K was obtained.

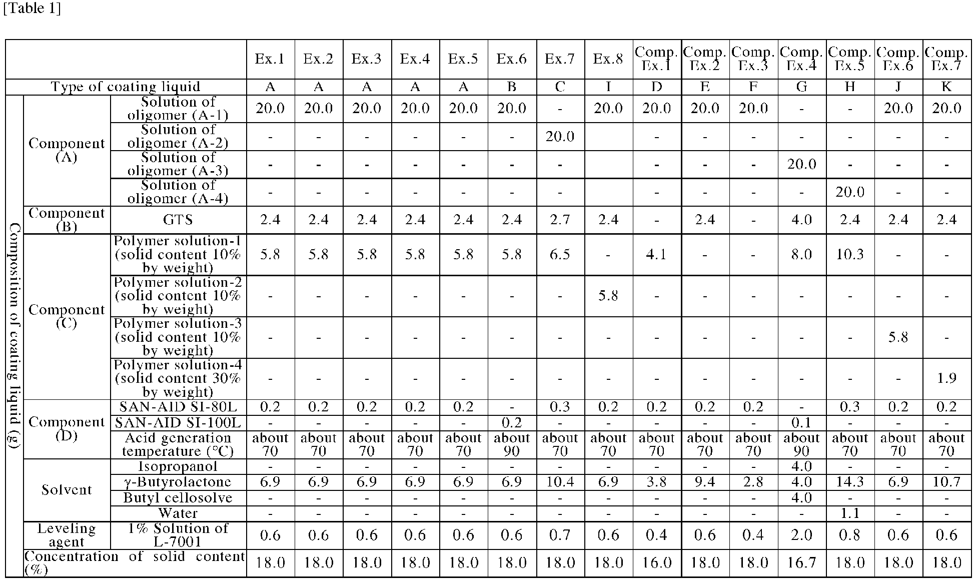

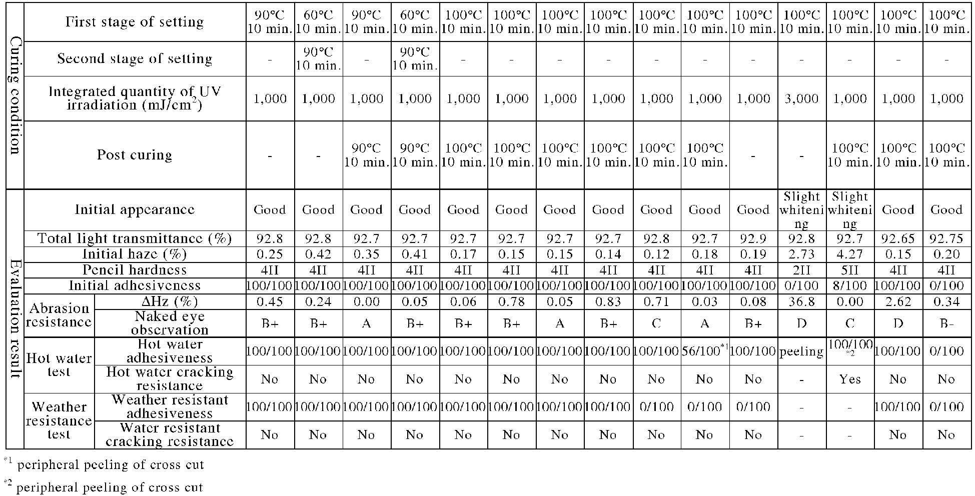

In Table 1, the abbreviations indicate the compounds described below.
GTS: γ-glycidoxypropyl trimethoxysilane (manufactured by Shin-Etsu Chemical Co., Ltd., product name: KBM-403)
BR-85: methyl polymethacrylate (manufactured by Mitsubishi Rayon Co., Ltd., DAIANAL BR-85, Mw of about 280,000)
BR-83: methyl polymethacrylate (manufactured by Mitsubishi Rayon Co., Ltd., DAIANAL BR-83, Mw of about 40,000)
SAN-AID SI-80L: solution of sulfonium salt-based acid generating agent (manufactured by SANSHIN CHEMICAL INDUSTRY CO., LTD., product name: SAN-AID SI-80L, 50% γ-butyrolactone solution)
SAN-AID SI-100L: solution of sulfonium salt-based acid generating agent (manufactured by SANSHIN CHEMICAL INDUSTRY CO., LTD., product name: SAN-AID SI-100L, 50% γ-butyrolactone solution)
1% Solution of L-7001: 1% γ-butyrolactone solution containing a leveling agent (manufactured by Dow Coming Toray Co., Ltd., product name: L-7001)

### [Example 1]

A suitable amount of the coating liquid A was added dropwise on the surface of an acryl plate (manufactured by Mitsubishi Rayon Co., Ltd., trade name: ACRYLITE L, total light transmittance of 92.6%, and haze of 0.08%) having a length of 10 cm, a width of 5 cm, and a thickness of 3 mm as a substrate, and applied by bar coating method (using a bar coater No. 26) such that the thickness of the cured coating film is 3 to 10 µm, thereby forming a coated film on the substrate surface.

Subsequently, the substrate having the coated film formed thereon was set for 10 minutes at 90°C using a hot air dryer.

After that, the coated film was cured by irradiating the substrate obtained after setting with ultraviolet (UV) ray at 1,000 mJ/cm² of integrated quantity of UV light by using a high pressure mercury lamp (ultraviolet ray irradiation device produced by ORC MANUFACTURING CO., LTD., trade name: HANDY-UV-1200, QRU-2161 type) to give a laminate having the cured coating film laminated on the substrate surface.

Evaluation results of the laminate were listed in Table 1.

Meanwhile, the UV irradiation quantity was measured by using a UV irradiance meter (manufactured by ORC MANUFACTURING CO., LTD., product name: UV-351, peak sensitivity wavelength: 360 nm).

### [Example 2]

With regard to conditions for setting, the first-stage setting at 60°C x 10 minutes was performed, and then the second-stage setting at 90°C x 10 minutes was performed. Other than that, a laminate having the cured coating film laminated on the substrate surface was obtained in the same manner as Example 1. Evaluation results of the laminate were listed in Table 1.

### [Example 3]

After curing of the coated film by UV irradiation, post-curing at 90°C x 10 minutes was performed. Other than that, a laminate having the cured coating film laminated on the substrate surface was obtained in the same manner as Example 1. Evaluation results of the laminate were listed in Table 1.

### [Example 4]

After curing of the coated film by UV irradiation, post-curing at 90°C x 10 minutes was performed. Other than that, a laminate having the cured coating film laminated on the substrate surface was obtained in the same manner as Example 2. Evaluation results of the laminate were listed in Table 1.

### [Example 5]

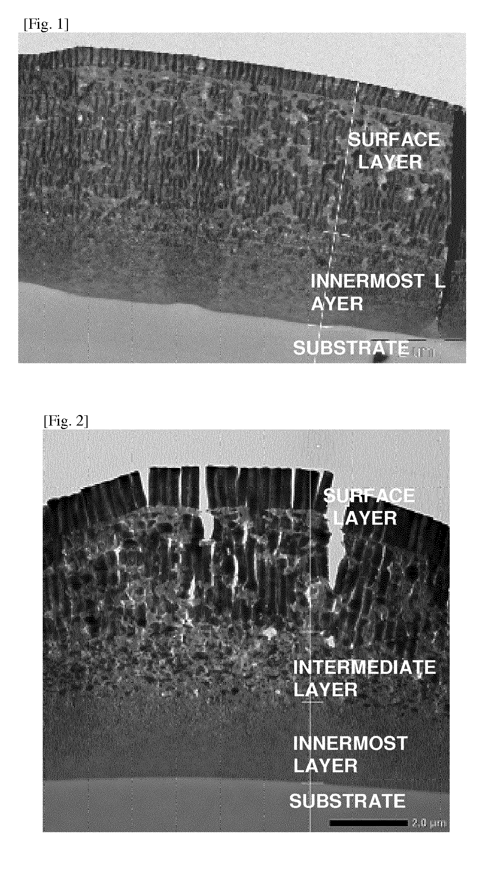

The setting at 100°C x 10 minutes was performed, and then the post-curing at 100°C x 10 minutes was performed. Other than that, a laminate having the cured coating film laminated on the substrate surface was obtained in the same manner as Example 3. Evaluation results of the laminate were listed in Table 1. Further, a photo of a transmission microscope image showing the layer structure of the cured coating film is illustrated in Fig. 1.

### [Examples 6, 7, and 8 and Comparative Examples 1, 2, and 5]

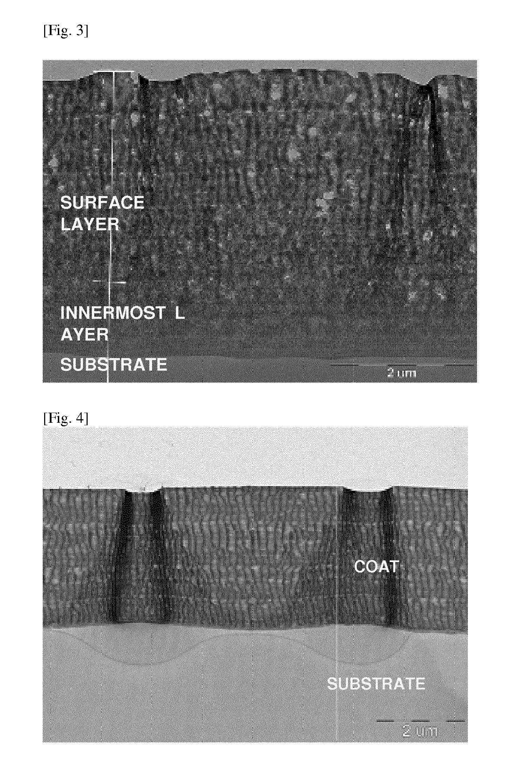

The type of coating liquid is as described in Table 1. Other than that, a laminate having the cured coating film laminated on the substrate surface was obtained in the same manner as Example 5. Evaluation results of the laminate were listed in Table 1. Further, photos of a transmission microscope image showing the layer structure of the cured coating film of Examples 7 and 8 and Comparative Examples 1 and 2 are illustrated in Fig. 2, 3, 4, and 5, respectively.

### [Comparative Example 3]

The type of coating liquid is as described in Table 1. Other than that, a laminate having the cured coating film laminated on the substrate surface was obtained in the same manner as Example 1. Evaluation results of the laminate were listed in Table 1.

### [Comparative Example 4]

The type of coating liquid is as described in Table 1, the setting at 60°C x 10 minutes was performed, and the integrated quantity of UV irradiation was adjusted to 3,000 mJ/cm². Other than that, a laminate having the cured coating film laminated on the substrate surface was obtained in the same manner as Example 1. Evaluation results of the laminate were listed in Table 1.

### [Comparative Examples 6 and 7]

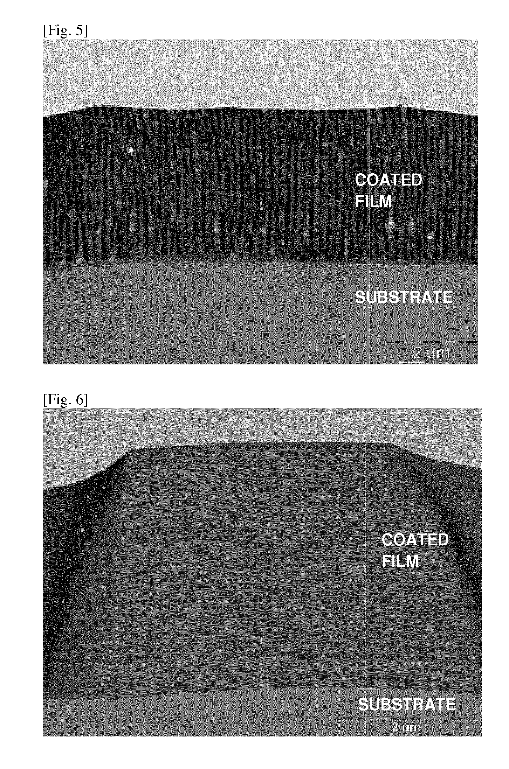

The type of coating liquid is as described in Table 1. Other than that, a laminate having the cured coating film laminated on the substrate surface was obtained in the same manner as Example 5. Evaluation results of the laminate were listed in Table 1. Further, a photo of a transmission microscope image showing the layer structure of the cured coating film of Comparative Example 6 is illustrated in Fig. 6.

The cured coating films obtained from Examples 1 to 8 exhibited excellent physical properties. However, Comparative Example 1 in which the component (B) is not contained exhibited poor abrasion resistance. In addition, Comparative Example 2 in which the component (C) is not contained exhibited poor hot water adhesiveness and poor weather resistant adhesiveness. In addition, Comparative Example 3 in which the component (B) and the component (C) are not contained exhibited poor weather resistant adhesiveness. In addition, Comparative Example 4 in which the component (A) has high Mw and the setting temperature is lower than the acid generation temperature of the component (D) exhibited poor initial appearance, initial haze, pencil hardness, initial adhesiveness, abrasion resistance, and hot water adhesiveness. In addition, Comparative Example 5 in which the component (A) has high Mw exhibited poor initial adhesiveness, abrasion resistance, and hot water adhesiveness, Comparative Example 6 in which the component (C) has low Mw exhibited poor abrasion resistance, and Comparative Example 7 showed no adhesiveness, and the desired performances may not be obtained.

From the photos of a transmission microscope image, in the cured coating film forming a surface of the laminate in Example 5, Example 7, and Example 8, which exhibited good physical properties, presence of a surface layer containing a relatively large amount of a siloxane-based polymer and an innermost layer containing a relatively large amount of an organic polymer was confirmed. In addition, in the coated film of Example 7, an intermediate layer in which a portion with strong contrast and a portion with weak contrast are mixedly present was identified. Also from the IR spectrum (ATR method with single reflectance) of Example 5 and Example 7, the surface layer showed strong exhibition of an absorption originating from a siloxane bond (near 1020 cm⁻¹) but almost no absorption of a carbonyl group originating from (C) the organic polymer (i.e., near 1730 cm⁻¹), and the surface layer contained a relatively large amount of a siloxane-based polymer.

In Example 5, Example 7, and Example 8, there was an innermost layer which contained a relatively large amount of (C) the organic polymer, and therefore the weather resistant adhesiveness was also good.

Meanwhile, from the photos of a transmission microscope image of Comparative Example 1 and Comparative Example 2, it was found that the cured coating film was homogeneous without having a surface layer and an innermost layer. Based on the IR spectrum, in Comparative Example 1, it was shown that the absorption of carbonyl group (near 1730 cm⁻¹) was detected at relatively high level and the siloxane-based polymer and (C) the organic polymer were presented in the surface layer. In Comparative Example 2, (C) the organic polymer was not added, and thus absorption of carbonyl group was not shown.

In Comparative Example 1 and Comparative Example 2, the innermost layer containing a relatively large amount of (C) the organic polymer was not present, and thus the weather resistant adhesiveness was poor.

## Claims

1. An active energy ray-curable composition comprising the following component (A) to component (D):
(A) a siloxane-based oligomer that is a hydrolytic condensate of a silane-based monomer containing an organoalkoxysilane represented by Formula (1), in which the siloxane-based oligomer has a weight average molecular weight of 2,000 or less
R¹ₐSi(OR²)₄₋ₐ (1)
(in which R¹ represents an organic group with 1 to 10 carbon atoms, R² represents an alkyl group with 1 to 5 carbon atoms or an acyl group with 1 to 4 carbon atoms, and a represents an integer of 1 to 3);
(B) an epoxy group-containing alkoxysilane represented by Formula (2)
R³R⁴_{b}Si(OR⁵)_{3-b} (2)
(in which R³ represents an organic group containing an epoxy group, R⁴ represents an organic group with 1 to 10 carbon atoms, R⁵ represents an alkyl group with 1 to 5 carbon atoms or an acyl group with 1 to 4 carbon atoms, and b represents an integer of 0 to 2);
(C) an organic polymer having a weight average molecular weight of 30,000 or more; and
(D) an active energy ray-sensitive acid generating agent.

2. The active energy ray-curable composition according to claim 1, wherein (C) the organic polymer is a poly(meth)acrylic acid ester resin.

3. The active energy ray-curable composition according to claim 1 or 2, wherein (D) the active energy ray-sensitive acid generating agent generates an acid also by heat.

4. The active energy ray-curable composition according to claim 3, further comprising a solvent.

5. A cured coating film obtained by curing an active energy ray-curable composition containing the following component (A) to component (D), the cured coating film comprising:
a surface layer containing a relatively large amount of (A) a siloxane-based polymer compared to an innermost layer; and
the innermost layer containing, compared to the surface layer, a relatively large amount of (C) an organic polymer which forms a surface in contact with the substrate surface of the cured coating film,
wherein the component (A) to the component (D) are as follows:
(A) a siloxane-based oligomer that is a hydrolytic condensate of a silane-based monomer containing an organoalkoxysilane represented by Formula (1), in which the siloxane-based oligomer has a weight average molecular weight of 2,000 or less
R¹ₐSi(OR²)₄₋ₐ (1)
(in which R¹ represents an organic group with 1 to 10 carbon atoms, R² represents an alkyl group with 1 to 5 carbon atoms or an acyl group with 1 to 4 carbon atoms, and a represents an integer of 1 to 3),
(B) an epoxy group-containing alkoxysilane represented by Formula (2)
R³R⁴_{b}Si(OR⁵)_{3-b} (2)
(in which R³ represents an organic group containing an epoxy group, R⁴ represents an organic group with 1 to 10 carbon atoms, R⁵ represents an alkyl group with 1 to 5 carbon atoms or an acyl group with 1 to 4 carbon atoms, and b represents an integer of 0 to 2),
(C) an organic polymer having a weight average molecular weight of 30,000 or more, and
(D) an active energy ray-sensitive acid generating agent.

6. A method for producing a laminate comprising:
forming a coated film by applying the active energy ray-curable composition according to claim 4 on a substrate surface;
evaporating a solvent in the coated film at a temperature which is at or above the temperature at which the active energy ray-sensitive acid generating agent generates an acid by heat; and
subsequently irradiating the coated film with active energy rays to form a cured coating film of the active energy ray-curable composition.
